# EUROPEAN PATENT SPECIFICATION

(11) **EP 4 286 483 B1**
(45) Date of publication and mention of the grant of the patent: **23.10.2024**
(21) Application number: 22176388.1
(22) Date of filing: 31.05.2022
(51) Int. Cl.: C09D 11/101

(54) **INKJET PRINTING METHODS**
TINTENSTRAHLDRUCKVERFAHREN
PROCÉDÉS D'IMPRESSION À JET D'ENCRE

(43) Date of publication of application: 06.12.2023
(73) Proprietor: AGFA NV, 2640 Mortsel (BE)
(72) Inventor: LOISEAU, Marion, 2640 Mortsel (BE)
(74) Representative: Strijckers, Hans Louis P.

(56) References cited:
- EP-A1- 2 682 273
- EP-A1- 2 786 878
- EP-A1- 3 070 130

## Description

### Technical Field

This invention relates to inkjet printing methods for varnishing a substrate.

### Background Art

A varnish is generally used in inkjet for delivering a glossy surface finish to a substrate carrying an image. The glossiness is realized by eliminating any micro roughness and making the surface as even as possible.

In order to produce a highly glossy surface, a so-called free-flowing UV varnish is used, which levels itself between the time of application to a substrate and the time of UV curing. The individual varnish droplets flow into one another to form a continuous varnish layer. Such a method using a fast flowing UV varnish to produce a smooth and highly glossy surface is disclosed for instance by US 2006198964 (HEIDELBERGER

### DRUCKMASCHINEN)

Drop formation and spreading is largely controlled by the surface tension of the varnish, which is commonly lowered with surfactants. A varnish typically has a very low static surface tension of about 20 to 22 mN/m for achieving fast flowing.

Different compositions have been suggested for inkjet varnishes in for instance EP 2786878 A (HP SCITEX) , US 2015126638 A (MGI DIGITAL TECHNOLOGY) , EP 3356479 A (MGI DIGITAL TECHNOLOGY) , EP 2682273 A (AGFA) and EP 3070130 A (AGFA) .

Also different inkjet printing methods have been suggested for improving the glossiness of a varnished substrate in for instance US 2019217649 (GREAT COMPUTER CORP) , EP 2810783 A (HP SCITEX) and EP 2909039 A (OCE) .

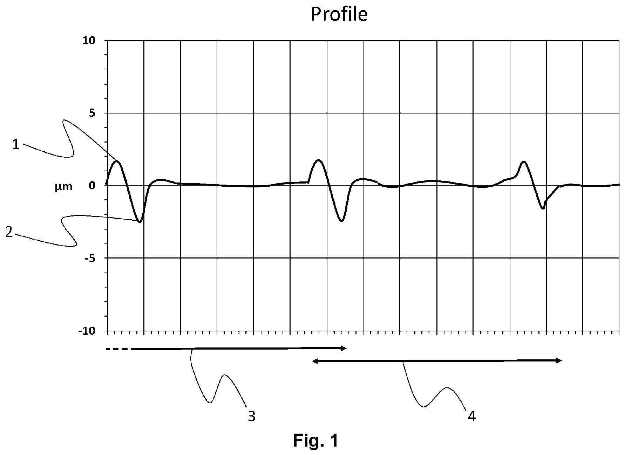

However, none of these methods address the gloss artefacts that occur where two print swaths are "stitched" together. A print swath is a band of print produced by one pass of a print head. Stitching is the joining of print swaths to give a continuous layer. Larger print heads can produce wider swaths so that no stitching is necessary. However, such print heads become too expensive above a certain width of about 10 to 30 cm, and printed substrates often have a width of more than 1 meter. In stitching with a single pass inkjet printer, the print heads are positioned in such a way so that there is a small overlap in the print swaths produced by the print heads. In stitching with a multi-pass inkjet printer, a print swath produced in a first pass of a print head is overlapped for a small portion by a print swath produced in a second pass of the print head. In both cases, the overlap often creates, due the so-called Marangoni effect, a small bump (1) and dip (2) as shown by Figure 1. Although these bumps and dips provide a relief of only a few µm in height, they impact the homogeneity of the gloss drastically.

There is thus still a need for improved inkjet printing methods for varnishing a substrate, wherein gloss artefacts by stitching are reduced or absent.

### Summary of invention

In order to overcome the problems described above, preferred embodiments of the present invention provide an inkjet printing method as claimed in claim 1.

It was surprisingly found that the glossiness artefact caused by stitching of print swaths could be reduced or even eliminated by controlling certain aspects of the varnish composition and applying a curing delay of multiple seconds. The varnish in the present invention has a high static surface tension contrary to normal practice in the art for achieving fast flowing of the varnish. The UV curing is also controlled by using UV LED sources having a spectral emission in the range of 360 - 420 nm and by having an minimum amount of acylphosphineoxide photoinitiator in the varnish.

Further objects of the invention will become apparent from the description hereinafter.

### Brief description of drawings

Figure 1 shows a profile taken of a substrate having a second print swath (4) partially overlapping a first print swath (3) and showing bumps (1) and dips (2) in the region of overlap.
Figure 2 shows a print module (10) containing print heads for colour ink (11) and print heads for varnish (12) and also UV LED modules A to C (15, 16, 17). In a multi-pass printer, the print module (10) moves in a scanning direction (13), while the substrate is transported in a direction (14).

### Description of embodiments

### Inkjet Printing Methods

An inkjet printing method in accordance with the invention comprises the steps of: a) jetting of a varnish on a substrate; and b) UV curing the varnish with UV LED sources having a spectral emission in the range of 360 - 420 nm after a curing delay of at least 2 seconds; wherein the static surface tension of the varnish is 28 mN/m or more; wherein the varnish contains more than 12 wt% of acylphosphineoxide photoinitiator based on the total weight of the varnish; and wherein the curing delay is the period between a varnish droplet landed on the substrate and the start of UV curing.

A preferred inkjet printing method uses a varnish containing a mixture of a polyfunctional acrylate and a methacrylate, wherein the polyfunctional acrylate is preferably a difunctional acrylate.

In a preferred embodiment of the inkjet printing method, the varnish has a viscosity at 25°C and at a shear rate of 1,000 s⁻¹ of less than 13.0 mPa.s, more preferably in the range of 7.0 to 12.5 mPa.s and most preferably 7.2 to 9.8 mPa.s.

The curing delay is at least 2 seconds, preferably at least 3 seconds and most preferably at least 4 seconds.

The substrate preferably has a width of more than 30 cm, preferably 50 cm or more.

### Inkjet Varnishes

An inkjet varnish curable by UV radiation contains a polymerizable composition and one or more photoinitiators. The polymerizable composition usually contains monomers and oligomers. The photoinitiator is a chemical compound that initiates the polymerization of monomers and oligomers when exposed to actinic radiation by the formation of a free radical.

Two types of photoinitiators can be distinguished for use in the inkjet varnish. A Norrish Type I initiator is an initiator which cleaves after excitation, yielding the initiating radical immediately. A Norrish type II-initiator is a photoinitiator which is activated by actinic radiation and forms free radicals by hydrogen abstraction from a second compound that becomes the actual initiating free radical. This second compound is called a polymerization synergist or co-initiator. Both type I and type II photoinitiators can be used in the present invention. Acylphosphine oxide photoinitiators are Norrish Type I photoinitiators.

The fast flowing of an UV inkjet varnish is generally accomplished by a low viscosity and by using high amounts of surfactants. Surfactants are used because of their ability to reduce the surface tension. The surface tension dictates whether a coating will wet and spread over, or retract from, a solid substrate. High amounts of surfactants may cause problems of foaming during handling of the varnish and during use in the inkjet printer. Foaming results in failing nozzles due to the presence of air bubbles in the inkjet print head.

For high curing speed, most inkjet inks and fluids are based on acrylate monomers and oligomers as they are more reactive than methacrylate monomers and oligomers.

It is also common knowledge that polyfunctional (meth)acrylate monomers cure faster than monofunctional (meth)acrylate monomers. The notation (meth)acrylate monomers stands for methacrylate monomers and acrylate monomers.

By making a specific mixture of monomers, it was possible to easily maximize the glossiness for stitching. A preferred inkjet varnish contains a polymerizable composition having: a) 10 to 30 wt%, preferably 10 to 20 wt% of a monofunctional methacrylate; b) 40 to 70 wt%, preferably 45 to 65 wt% of a polyfunctional acrylate; and c) 0 to 15 wt% of a monofunctional acrylate, wherein the weight percentages are based on the total weight of the varnish. In such a mixture, the monofunctional methacrylate slows down the UV curing speed, while the polyfunctional acrylate accelerates the UV curing speed.

### Acylphosphine Oxide Photoinitiators

Acylphosphine oxide photoinitiators are regarded to be the most effective photoinitiators for curing UV curable compositions with UV LED sources having a spectral emission in the range of 360 - 420 nm.

One or more acylphosphine oxide photoinitiators may be used. The acylphosphine oxide photoinitiator may be a monoacylphosphine oxide photoinitiator or a bisacylphosphine oxide photoinitiator, or a combination of both.

Preferred acylphosphine oxide photoinitiators include trimethylbenzoyl diphenyl phosphine oxide, ethoxyphenyl(2,4,6-trimethylbenzoyl)phosphine oxide and bis(2,4,6-(2,4,6-trimethylbenzoyl) phenyl phosphine oxide.

Acylphosphine oxide photoinitiators are also commercially readily available, such as Omnirad^{™} TPO, Omnirad^{®}TPO-L and Omnirad^{®}819 from IGM.

A particular preferred acylphosphine oxide photoinitiator is ethoxyphenyl(2,4,6-trimethylbenzoyl)phosphine oxide because it is liquid under ambient temperatures. High concentrations of non-liquid photoinitiators, such as trimethylbenzoyl diphenyl phosphine oxide and bis(2,4,6-(2,4,6-trimethylbenzoyl) phenyl phosphine oxide, may cause solubility issues resulting in solid particles in the cured varnish that negatively impact the glossiness.

For improving the stitch glossiness, the varnish contains more than 12 wt%, preferably more than 13 wt% and most preferably more than 14 wt% of acylphosphineoxide photoinitiator based on the total weight of the varnish.

In a preferred embodiment, the acylphosphineoxide photoinitiator is present in an amount of more than 40 mmole of acylphosphineoxide photoinitiator per 100 g of varnish. At lower concentrations of acylphosphineoxide photoinitiator, generally insufficient improvement of the gloss artefacts by stitching is observed.

Glossiness is usually only one aspect for the luxury aspect of packaging applications and indoor decoration. Avoiding undesired odour is another aspect thereof. Upon UV exposure, an acylphosphineoxide photoinitiator splits in two radical components: an acyl component and a phosphine oxide component. The phosphine oxide component is generally almost completely integrated in the polymerizing network of the UV cured polymerizable composition in the varnish. However, this is not the case for the acyl component, which after hydrogen abstraction may form an aldehyde, such as mesitaldehyde, that results in an undesired odour. Therefore, in a preferred embodiment, the acylphosphine oxide photoinitiator is an acyl phosphine oxide initiator wherein the acyl group is selected from the group consisting of a benzoyl group substituted by an urea group, an oxalylamide group or a polymerizable group; a 2,6-dimethyl benzoyl group substituted in position 3 by an urea group, an oxalylamide group or a polymerizable group; a 2,6-dimethoxy benzoyl group substituted in position 3 by an urea group, an oxalylamide group or a polymerizable group; a 2,4,6-trimethyl benzoyl group substituted in position 3 by an urea group, an oxalylamide group or a polymerizable group; and a 2,4,6-trimethoxybenzoyl group substituted in position 3 by an urea group, an oxalylamide group or a polymerizable group. The polymerizable group is preferably a (meth)acrylate group, more preferably an acrylate group. Preferred acylphosphine oxides are disclosed in EP 3810710 A (AGFA) and WO 2014/051026 (FUJIFILM) .

### Other Photoinitiators and Co-Initiators

In addition to acylphosphine oxides, also other photoinitiators may be used. However, many photoinitiators do not absorb in the range of 360 - 420 nm and are thus preferably not incorporated in the varnish. Suitable other photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

Preferred other photoinitiators include thioxanthones, carbazoles and α-hydroxyketones. Specific examples of other photo-initiators may include, but are not limited to, the following compounds or combinations thereof: 1-hydroxycyclohexyl phenyl ketone, isopropylthioxanthone and diethyl thioxanthone.

A disadvantage of other photoinitiators is that they often produce colored side products after UV curing. Especially thioxanthone type photoinitiators may exhibit strong photoyellowing. An inkjet varnish is expected to be colourless after curing, as else it would induce colour shifts in in the image printed on the substrate. So preferably, the inkjet varnish contains less than 2, preferably less than 1 wt% of thioxanthone photoinitiator based on the total weight of the varnish. Most preferably the varnish does not contain a thioxanthone photoinitiator.

Most preferably the varnish contains only acylphosphine oxides, because the latter are known to undergo bleaching after UV curing, thus resulting in a colourless varnish.

Photoinitiators may also be combined with co-initiators. The most effective co-initiators are amine synergists. In order to increase the photosensitivity further, the UV inkjet varnish may contain one or more amine synergists. Suitable examples of the co-initiators can be categorized in three groups:
(1) tertiary aliphatic amines such as methyldiethanolamine, dimethylethanolamine, triethanolamine, triethylamine and N-methylmorpholine;
(2) aromatic amines such as amylparadimethylaminobenzoate, 2-n-butoxyethyl-4-(dimethylamino) benzoate, 2-(dimethylamino)ethylbenzoate, ethyl-4-(dimethylamino)benzoate, and 2-ethylhexyl-4-(dimethylamino)benzoate; and
(3) (meth)acrylated amines such as dialkylamino alkyl(meth)acrylates (e.g., diethylaminoethylacrylate) or N-morpholinoalkyl-(meth)acrylates (e.g., N-morpholinoethyl-acrylate).
The preferred co-initiators are aminobenzoates.

In a preferred embodiment, the other photoinitiator is selected from the group consisting of non-polymeric multifunctional photoinitiators, oligomeric or polymeric photoinitiators and polymerizable photoinitiators. Such a diffusion hindered photoinitiator exhibits a much lower mobility in a cured layer of the UV curable varnish than a low molecular weight monofunctional photoinitiator, such as benzophenone. Including diffusion hindered photoinitiators, and also diffusion hindered co-initiators do not only have a safety advantage for the operator of the inkjet printer or for indoor decoration applications, but are also environmentally friendly as these compounds cannot be leached out from the outdoor billboard by e.g. acid rain.

The total amount of amine synergist and photoinitiator(s) is preferably not more than 35 wt% and more preferably not more than 30 or 28 wt% based on the total weight of the varnish. Higher amounts often result in an insufficient improvement of the glossiness for stitching, because solubility issues occur.

### Monofunctional methacrylates

A monofunctional methacrylate is a polymerizable compound containing only one polymerizable group, more particularly a methacrylate group. The inkjet varnish preferably contains 10 to 30 wt%, more preferably 10 to 20 wt% of a monofunctional methacrylate.

The monofunctional methacrylate may be one or more monomers or one or more oligomers, or a combination of them.

Suitable monofunctional methacrylates include methacrylic acid, alkylmethacrylates (linear, branched and cycloalkyl) such as methylmethacrylate, n-butylmethacrylate, tert-butylmethacrylate, cyclohexylmethacrylate, 2-ethylhexylmethacrylate, and isotridecyl methacrylate; arylmethacrylates such as benzyl methacrylate, and phenyl methacrylate; and hydroxyalkylmethacrylates such as hydroxyethylmethacrylate, and hydroxypropylmethacrylate.

Preferred monofunctional methacrylates are tetrahydrofurfuryl methacrylate, alkyl methacrylate (preferably a C₁₂ to C₁₅ alkyl methacrylate), ethoxyethoxyethylmethacrylate, 2 phenoxyethyl methacrylate, ethoxylated-4-phenyl methacrylate, ureido methacrylate, behenyl methacrylate, and 3,3,5 trimethyl cyclohexanol methoxy polyethylene glycol (350) methacrylate.

Particularly preferred monofunctional methacrylates are monofunctional methacrylates having a relatively high glass transition temperature T_{g}, preferably a T_{g} higher than 25°C, more preferably a T_{g} higher than 40°C. The method for determining the T_{g} to be taken is the DSC method in ISO 11357-2:1999.

The most preferred monofunctional methacrylate include isobornyl methacrylate.

### Monofunctional acrylates

A monofunctional acrylate is a polymerizable compound containing only one polymerizable group, more particularly an acrylate group. The inkjet varnish preferably includes 0 to 15 wt%, more preferably 0 to 5 wt%, and most preferably 0 wt% of a monofunctional acrylate, with the weight percentage wt% based on the total weight of the polymerizable composition.

The monofunctional acrylate may be one or more monomers or one or more oligomers, or a combination of them.

Suitable monofunctional acrylates include isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, 2-acryloyloxyethylsuccinic acid, 2-acryloyxyethylphthalic acid, 2-acryloxyethyl-2-hydroxyethyl-phthalic acid, lactone modified flexible acrylate, and t-butylcyclohexyl acrylate

Other suitable monofunctional acrylates include caprolactone acrylate, cyclic trimethylolpropane formal acrylate, ethoxyethoxyethylmethacrylate, ethoxylated nonyl phenol acrylate, isodecyl acrylate, isooctyl acrylate, octyldecyl acrylate, alkoxylated phenol acrylate, and tridecyl acrylate.

Preferred monofunctional acrylates are tetrahydrofurfuryl methacrylate, alkyl acrylate (preferably a C₁₂ to C₁₅ alkyl acrylate), ethoxyethoxyethylacrylate, 2 phenoxyethyl acrylate, ethoxylated-4-phenyl acrylate, and 3,3,5 trimethyl cyclohexanol methoxy polyethylene glycol (350) acrylate.

Particularly preferred monofunctional acrylates are monofunctional acrylates having a relatively high glass transition temperature T_{g}, preferably a T_{g} higher than 25°C, more preferably a T_{g} higher than 40°C. The method for determining the T_{g} to be taken is the DSC method in ISO 11357-2:1999.

The most preferred monofunctional acrylate is isobornyl acrylate.

### Polyfunctional acrylates

A polyfunctional acrylate means that two, three or more polymerizable acrylate groups are present. The UV curable varnish preferably includes 40 to 70 wt%, more preferably 45 to 60 wt% of a polyfunctional acrylate, with the weight percentage wt% based on the total weight of the polymerizable composition.

In a preferred embodiment, the polyfunctional acrylate is a duofunctional acrylate containing two polymerizable groups, namely two acrylate groups

The polyfunctional acrylate may be one or more monomers or one or more oligomers, or a combination of them.

Suitable polyfunctional acrylates include triethylene glycol diacrylate, tetraethylene glycol diacrylate, polyethylene glycol diacrylate, dipropylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerythritol tetraacrylate, pentaerythritolethoxy tetraacrylate, dipentaerythritol hexaacrylate, ditrimethylolpropane tetraacrylate, glycerolpropoxy triacrylate, and caprolactam modified dipentaerythritol hexaacrylate

Other suitable difunctional acrylates include alkoxylated cyclohexanone dimethanol diacrylate, alkoxylated hexanediol diacrylate, dioxane glycol diacrylate, dioxane glycol diacrylate, cyclohexanone dimethanol diacrylate, diethylene glycol diacrylate and neopentyl glycol diacrylate.

Other higher functional acrylates include propoxylated glycerine triacrylate and propoxylated trimethylolpropane triacrylate, di-trimethylolpropane tetraacrylate, dipentaerythritol pentaacrylate, ethoxylated pentaerythritol tetraacrylate, methoxylated glycol acrylates and acrylate esters

Preferred polyfunctional acrylates include dipropylene glycol diacrylate, tripropylene glycol diacrylate, 1,6-hexanediol diacrylate, cyclohexanone dimethanol diacrylate, polyethyleneglycol 200 diacrylate, 3-methyl 1,5-pentanediol diacrylate, pentaerythritol tetraacrylate, trimethylolpropane triacrylate and dipentaerythritol pentaacrylate.

### Polymerization inhibitors

The UV curable varnish may contain a polymerization inhibitor. Suitable polymerization inhibitors include phenol type antioxidants, hindered amine light stabilizers, phosphor type antioxidants, hydroquinone monomethyl ether commonly used in (meth)acrylate monomers, and hydroquinone, t-butylcatechol, pyrogallol may also be used.

Suitable commercial inhibitors are, for example, Sumilizer^{™} GA-80, Sumilizer^{™} GM and Sumilizer^{™} GS produced by Sumitomo Chemical Co. Ltd.; Genorad^{™} 16, Genorad^{™} 18 and Genorad^{™} 20 from Rahn AG; Irgastab^{™} UV10 and Irgastab^{™} UV22, Tinuvin^{™} 460 and CGS20 from Ciba Specialty Chemicals; Floorstab^{™} UV range (UV-1, UV-2, UV-5 and UV-8) from Kromachem Ltd, Additol^{™} S range (S100, S110, S120 and S130) from Cytec Surface Specialties.

A preferred polymerization inhibitor is Irgastab^{™} UV10 from BASF.

Since excessive addition of these polymerization inhibitors will lower the ink sensitivity to curing, it is preferred that the amount capable of preventing polymerization is determined prior to blending. The amount of a polymerization inhibitor is preferably lower than 2 wt% based on the total weight of the UV curable varnish.

### Surfactants

Surfactants may be used in the UV curable inkjet varnish to control the surface tension, which in the present invention is preferably 28 mN/m or more, more preferably even 29, 30 mN/m or more. The surface tension is not only determined by the amount and type of surfactant, but also by the polymerizable compounds and other additives in the ink composition.

The surfactant(s) can be anionic, cationic, non-ionic, or zwitter-ionic and are usually added in a total quantity less than 2 wt% based, preferably less than 1 wt% based on the total weight of the UV curable inkjet varnish.

Suitable surfactants include fluorinated surfactants, fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL^{™} 104, 104H, 440, 465 and TG available from AIR PRODUCTS & CHEMICALS INC.).

Preferred surfactants include fluoro surfactants (such as fluorinated hydrocarbons) and silicone surfactants. The silicones are typically siloxanes and can be alkoxylated, polyether modified, polyester modified, polyether modified hydroxy functional, amine modified, epoxy modified and other modifications or combinations thereof. Preferred siloxanes are polymeric, for example polydimethylsiloxanes.

The fluorinated or silicone compound used as a surfactant may be a crosslinkable surfactant. Suitable copolymerizable compounds having surface-active effects include, for example, polyacrylate copolymers, silicone modified acrylates, silicone modified methacrylates, acrylated siloxanes, polyether modified acrylic modified siloxanes, fluorinated acrylates, and fluorinated methacrylate. These acrylates can be mono-, di-, tri- or higher functional (meth)acrylates.

Silicone surfactants are preferred in the curable UV curable varnishes of the present invention, especially the reactive silicone surfactants, which are able to be polymerized together with the polymerizable compounds during the curing step.

Examples of useful commercial silicone surfactants are those supplied by BYK CHEMIE GMBH (including Byk^{™}-302, 307, 310, 331, 333, 341, 345, 346, 347, 348, UV3500, UV3510 and UV3530), those supplied by TEGO CHEMIE SERVICE (including Tego Rad^{™} 2100, 2200N, 2250, 2300, 2500, 2600 and 2700), Ebecryl^{™} 1360 a polysilixone hexaacrylate from CYTEC INDUSTRIES BV and Efka^{™}-3000 series (including Efka^{™}-3232 and Efka^{™}-3883) from EFKA CHEMICALS B.V..

### Substrates and Printed Articles

In the inkjet printing method of the present invention, the varnish is jetted on a substrate, whereby a varnish layer is formed by droplets of the varnish. The substrate preferably includes a printed image, more preferably an inkjet printed colour image.

If the substrate includes an inkjet printed colour image, said image contains a colour layer, formed by droplets of a colour ink. The droplet size of the droplets forming the varnish layer and the droplet size of the droplets forming the colour layer are hereby preferably substantially equal and/or the layer thickness of the varnish layer larger than the layer thickness of the colour layer, more preferably at least 1.2 times thicker. This results in a more uniformly applied varnish layer, and thus a higher glossiness.

In a preferred embodiment, the image on the substrate was at least partially printed using one or more UV curable pigmented colour inkjet inks jetted by the same inkjet printing device. The period between a droplet of the one or more UV curable pigmented colour inkjet inks landed on the substrate and the start of UV curing is preferably shorter than 1 second. The latter generally improves the image quality.

In a preferred embodiment, the varnish is applied image wise on a colour image. This is not only cost-efficient, but may also allow to generate a certain relief on e.g. a luxury packaging or indoor decoration article.

There is no real limitation on the type of substrate for inkjet printing the UV curable varnish of the invention on. The substrates may have ceramic, metallic, glass, wood, paper or polymeric surfaces for printing. The substrate may also be primed, e.g. by a white ink.

The substrate may be porous, as e.g. textile, paper and card board substrates, or substantially non-absorbing substrates such as e.g. a plastic substrate having a polyethylene terephthalate surface.

Preferred substrates including surfaces of polyethylene, polypropylene, polycarbonate, polyvinyl chloride, polyesters like polyethylene terephthalate (PET), polyethylene naphthalate (PEN) and polylactide (PLA) and polyimide.

The substrate may also be a paper substrate, such as plain paper or resin coated paper, e.g. polyethylene or polypropylene coated paper. There is no real limitation on the type of paper and it includes newsprint paper, magazine paper, office paper, wallpaper but also paper of higher grammage, usually referred to as boards, such as white lined chipboard, corrugated board and packaging board.

The substrates may be transparent, translucent or opaque. Preferred opaque substrates includes so-called synthetic paper, like the Synaps^{™} grades from Agfa-Gevaert which are an opaque polyethylene terephthalate sheet having a density of 1.10 g/cm³ or more.

There is no restriction on the shape of the substrate. It can be a flat sheet, such a paper sheet or a polymeric film or it can be a three dimensional object like e.g. a plastic coffee cup. The three dimensional object can also be a container like a bottle or a jerry-can for including e.g. oil, shampoo, insecticides, pesticides, solvents, paint thinner or other type of liquids.

In a preferred embodiment of the inkjet printing method, the printed article is selected from point-of-purchase displays, billboards, vehicle graphics, backlight signage, exhibition panels, stage graphics, construction announcements, ad panels, etc.

### Inkjet Printing Devices

The UV curable varnish is jetted by one or more print heads ejecting small droplets in a controlled manner through nozzles onto a substrate moving relative to the print head(s).

In a preferred embodiment, the inkjet printing device used for jetting the one or more UV curable colour inkjet inks on a substrate is also used for jetting the UV curable varnish.

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with inkjet ink or liquid. When the voltage is again removed, the ceramic expands to its original shape, ejecting a drop of ink from the print head. However, the inkjet printing method according to the present invention is not restricted to piezoelectric inkjet printing. Other inkjet print heads can be used and include various types, such as a continuous type and thermal, electrostatic and acoustic drop on demand type.

The inkjet print head normally scans back and forth in a transversal direction across the moving ink-receiver surface. The inkjet print head may not print on the way back, but bi-directional printing is preferred for obtaining a high areal throughput. Another preferred printing method is by a "single pass printing process", which can be performed by using multiple staggered inkjet print heads which cover the entire width of the ink-receiver surface. In a single pass printing process, the inkjet print heads usually remain stationary and the ink-receiver surface is transported under the inkjet print heads.

In a particularly preferred embodiment, the inkjet printing of the UV curable varnish is performed in a multiple pass printing mode. Failing nozzles in a single pass printing process create line defects in colour image or gloss artefacts when printing varnish.

### UV Curing Devices

The UV curable varnish according to the present invention is cured by ultraviolet radiation.

The UV curing device may be arranged in combination with the print module containing on or more print heads for jetting the UV curable varnish (12) and may travel therewith so that the curable composition is exposed to curing radiation very shortly after been jetted. The print module may contain one or more print heads for jetting an UV curable colour ink (11).

In such an arrangement it can be difficult to provide a small enough radiation source connected to and travelling with the print head. Therefore, a static fixed UV radiation source may be employed, which is connected to the print module by means of flexible radiation conductive means such as a fibre optic bundle or an internally reflective flexible tube. Alternatively, the UV radiation may be supplied from a fixed source to the print module by an arrangement of mirrors.

In the present invention, the UV sources are preferably UV LED modules. UV LED can easily be incorporated in a scanning print module due to their compactness. A preferred UV source is one exhibiting a relatively long wavelength UV-contribution having a dominant wavelength in the range of 360-420 nm. Such a light source is preferred because of reduced light scattering therewith resulting in more efficient interior curing.

For facilitating curing, the inkjet printer often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### Examples

### Measurement methods

### 1. Viscosity

The viscosity of the UV curable compositions was measured at 45°C and at a shear rate of 1,000 s⁻¹ using a Rotovisco^{™} RV1 viscometer from HAAKE.

### 2. Surface tension

The static surface tension of the UV curable inks was measured with a KRÜSS tensiometer K9 from KRÜSS GmbH, Germany at 25°C after 60 seconds.

### 3. Stitch

The stitch was evaluated by the human eye according to the criterion in Table 1. The appearance evaluation was performed under direct illumination, i.e. not diffuse illumination as this causes diffuse reflection and decreases the gloss impression. Direct illumination was performed using 2 Philips MASTER TL - D Super 80 36W - 840 Cool White lamps. The observation of the surface was made under an angle of 45°, wherein the human eye focussed on the surface itself, rather than focussing on the reflected image of the light source. By focussing on the surface itself, information of the flow/levelling defects (here the stitch appearance) is obtained.

**Table 1**

| **Score** | **Criterion** |
|---|---|
| C | Stitch clearly visible, poor uniform gloss appearance |
| B | Reduced visibility of the stitch, improved uniform gloss appearance |
| A | No stitch visible, uniform gloss appearance |

### Materials

IBOMA is isobornylmethacrylate available as Photomer^{™}2012 from IGM Resins.

HDDA is 1,6-hexanediol diacrylate available as Sartomer^{™} SR238 from SARTOMER.

TPO is trimethylbenzoyl diphenyl phosphine oxide (MW=348) supplied as Omnirad^{™} TPO by IGM.

TPO-L is an acylphosphine oxide photoinitiator (MW=316) available as Omnirad^{®}TPO-L from IGM RESINS.

CN3755 is a diacrylated amine synergist available as Sartomer^{™} CN3755 from SARTOMER.

CN963B80 is a urethane acrylate oligomer having two acrylate groups (MW=1900) available as Sartomer^{™} CN963B80 from ARKEMA.

Surf-1 is a polyether modified polydimethylsiloxane surfactant available as BYK^{™} UV 3510 from BYK CHEMIE GMBH.

Surf-2 is polyacrylate Copolymeric surfactant available as BYK^{™}3566 from BYK CHEMIE GMBH.

Surf-3 is a siloxane polyalkyleneoxide Copolymeric surfactant available as Silwet^{™} L7604 from Momentive Performance Materials.

Surf-4 is a siloxane polyalkyleneoxide Copolymeric surfactant available as Indusil 391 from Momentive Performance Materials.

Surf-5 is a liquid alkylated silicone surfactant available as Silwax^{™} B116 from SILTECH CORPORATION.

Surf-6 is an ethylene oxide/propylene oxide copolymer based on ethylene diamine used as low HLB surfactant available as Synperonic^{™} 1310 from Croda Industrial Chemicals.

UV10 is 4-hydroxy-2,2,6,6-tetramethylpiperidinooxy sebacate available as from Shanghai FINC Chemical Technology Co., Ltd..

Dibond substrate is a 2 mm thick plate having a polyethylene core sandwiched between two aluminum layers laminated thereon available as Dibond^{®} from ANTALIS.

### Example 1

This example illustrates how gloss inhomogeneity due to stitching can be reduced or eliminated in the inkjet varnishing of a substrate.

### Preparation of Varnish compositions

The varnishes COMP-1 to COMP-4 and INV-1 to INV-6 were all prepared in the same manner by mixing the components according to and . In order to keep the varnish compositions comparable, the surface tension was regulated by using different surfactants in the same concentration. The weight percentage (wt%) of each component is based on the total weight of the varnish. The viscosity and the static surface tension was measured for each varnish composition and is also listed in Table 2 and Table 3 in mPa.s, respectively mN/m.

**Table 2**

| **wt% of:** | **COMP-1** | **COMP-2** | **COM P-3** | **COMP-4** |
|---|---|---|---|---|
| **HDDA** | 51.10 | 56.40 | 59.48 | 55.40 |
| **IBOMA** | 16.05 | 16.75 | 17.67 | 17.75 |
| **CN3755** | 17.00 | 11.00 | 7.00 | 12.00 |
| **TPO** | 15.00 | 15.00 | 15.00 | |
| **TPO-L** | | | | 12.00 |
| **CN963B80** | | | | 2.00 |
| **UV10** | 0.50 | 0.50 | 0.50 | 0.50 |
| **Surf-1** | 0.35 | 0.35 | 0.35 | |
| **Surf-2** | | | | 0.35 |
| **Total** = | 100.00 | 100.00 | 100.00 | 100.00 |
| **Viscosity** | 11.6 | 9.0 | 7.4 | 8.3 |
| **Surface Tension** | 22.2 | 23.8 | 24.0 | 29.5 |

**Table 3**

| **wt% of:** | **INV-1** | **INV-2** | **INV-3** | **INV-4** | **INV-5** | **INV-6** |
|---|---|---|---|---|---|---|
| **HDDA** | 56.40 | 56.30 | 56.40 | 56.40 | 57.40 | 57.40 |
| **IBOMA** | 16.75 | 16.70 | 16.75 | 16.75 | 16.75 | 16.75 |
| **CN3755** | 11.00 | 11.00 | 11.00 | 11.00 | 10.00 | 10.00 |
| **TPO** | 15.00 | 15.00 | 15.00 | 15.00 | 15.00 | |
| **TPO-L** | | | | | | 15.00 |
| **UV10** | 0.50 | 0.50 | 0.50 | 0.50 | 0.50 | 0.50 |
| **Surf-2** | | | | | 0.35 | 0.35 |
| **Surf-3** | 0.35 | | | | | |
| **Surf-4** | | 0.50 | | | | |
| **Surf-5** | | | 0.35 | | | |
| **Surf-6** | | | | 0.35 | | |
| **Total =** | 100.00 | 100.00 | 100.00 | 100.00 | 100.00 | 100.00 |
| **Viscosity** | 9.2 | 9.2 | 8.9 | 9.0 | 8.4 | 7.4 |
| **Surface Tension** | 30.8 | 30.1 | 30.0 | 34.4 | 31.6 | 31.7 |

### Results and Evaluation

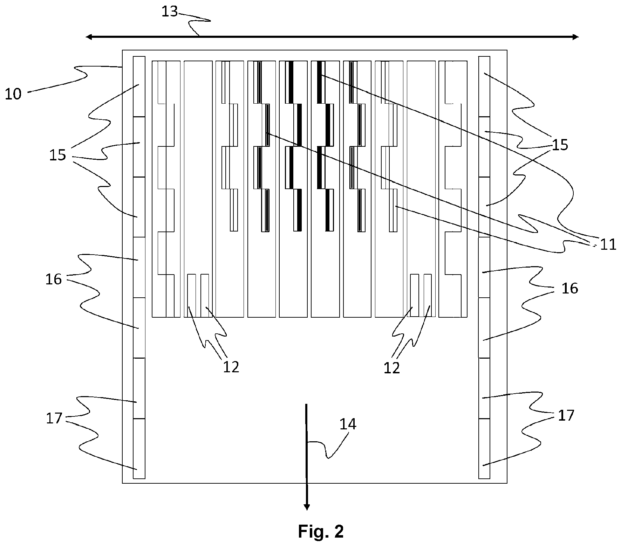

The varnishes COMP-1 to COMP-4 and INV-1 to INV-6 were printed on a Dibond substrate by a multipass printer Tauro^{®} H3300 HS from AGFA employing a CMYKLcLk inkset Anuvia^{®} 1050 from AGFA and a print module (10) as depicted in Figure 2. A test pattern including unprinted areas and areas with text and multicolour graphics, involving also dark green squares of 40 cm x 40 cm was bi-directionally printed by the print heads (11) and simultaneously UV cured by the UV LED modules (15). The varnish compositions COMP-1 to COMP-4 and INV-1 to INV-6 were jetted using the print heads (12) and having the UV LED modules (16) turned off. UV curing of the varnish occurred after a delay of about 5 seconds using the UV LED modules (17).

The effect of the stitching on the gloss was evaluated for each printed sample and is shown in Table 4, which also shows the static surface tension of the varnish and the amount of acylphosphine oxide initiator in the varnish.

**Table 4**

| **Printed sample** | **Static surface tension (mN/m)** | **wt% APO** | **Score for stitch** |
|---|---|---|---|
| **COMP-1** | 22.2 | 15 | C |
| **COMP-2** | 23.8 | 15 | C |
| COM**P-3** | 24.0 | 15 | C |
| **COMP-4** | 29.5 | 12 | C |
| **INV-1** | 30.8 | 15 | B |
| **INV-2** | 30.1 | 15 | B |
| **INV-3** | 30.0 | 15 | A |
| **INV-4** | 34.4 | 15 | B |
| **INV-5** | 31.6 | 15 | A |
| **INV-6** | 31.7 | 15 | A |

From Table 4, it should be clear that only the inventive samples are capable of reducing the gloss artefacts as they comply with the required static surface tension and the minimum amount of acylphosphine oxide initiator in the varnish.

### Reference signs list

Table 5 shows the reference signs used in Figures 1 and 2.

**Table 5**

| | |
|---|---|
| 1 | Bump |
| 2 | Dip |
| 3 | First print swath |
| 4 | Second print swath |
| 10 | Print module |
| 11 | Print head for colour ink |
| 12 | Print head for varnish |
| 13 | Scanning direction |
| 14 | Transport direction of substrate |
| 15 | UV LED module |
| 16 | UV LED module |
| 17 | UV LED module |

## Claims

1. An inkjet printing method comprising the steps of:
a) jetting of a varnish on a substrate; and
b) UV curing the varnish with UV LED sources having a spectral emission in the range of 360 - 420 nm after a curing delay of at least 2 seconds;
wherein the static surface tension of the varnish is 28 mN/m or more, determined according to the method identified in the description;
wherein the varnish contains more than 12 wt% of acylphosphineoxide photoinitiator based on the total weight of the varnish; and
wherein the curing delay is the period between a varnish droplet landed on the substrate and the start of UV curing.

2. The inkjet printing method according to claim 1, wherein the varnish contains a mixture of a polyfunctional acrylate and a methacrylate

3. The inkjet printing method according to claim 2, wherein the polyfunctional acrylate is a difunctional acrylate.

4. The inkjet printing method according to any one of claims 1 to 3, wherein the varnish contains a polymerizable composition having:
a) 10 to 30 wt% of a monofunctional methacrylate;
b) 40 to 70 wt% of a polyfunctional acrylate; and
c) 0 to 15 wt% of a monofunctional acrylate, wherein the weight percentages are based on the total weight of the varnish.

5. The inkjet printing method according to any one of claims 1 to 4, wherein the monofunctional methacrylate has a Tg larger than 25°C, determined according to the method identified in the description.

6. The inkjet printing method according to claim 5, wherein the monofunctional methacrylate includes isobornylmethacrylate.

7. The inkjet printing method according to any one of claims 1 to 6, wherein the polymerizable composition contains no monofunctional acrylate

8. The inkjet printing method according to any one of claims 1 to 7, wherein the varnish has a viscosity at 25°C and at a shear rate of 1,000 s⁻¹ of less than 13.0 mPa.s.

9. The inkjet printing method according to any one of claims 1 to 8, wherein the acylphosphine oxide photoinitiator is an acyl phosphine oxide initiator wherein the acyl group is selected from the group consisting of a benzoyl group substituted by an urea group, an oxalylamide group or a polymerizable group; a 2,6-dimethyl benzoyl group substituted in position 3 by an urea group, an oxalylamide group or a polymerizable group; a 2,6-dimethoxy benzoyl group substituted in position 3 by an urea group, an oxalylamide group or a polymerizable group; a 2,4,6-trimethyl benzoyl group substituted in position 3 by an urea group, an oxalylamide group or a polymerizable group; and a 2,4,6-trimethoxybenzoyl group substituted in position 3 by an urea group, an oxalylamide group or a polymerizable group.

10. The inkjet printing method according to any one of claims 1 to 9, wherein the substrate includes a printed image.

11. The inkjet printing method according to claim 10, wherein the printed image is an inkjet printed colour image formed by droplets of a colour ink.

12. The inkjet printing method according to claim 11, wherein the droplet size of the droplets forming the varnish layer and the droplet size of the droplets forming the colour image are substantially equal.

13. The inkjet printing method according to claim 11 or 12, wherein the layer thickness of the varnish layer larger than the layer thickness of the colour image.

14. The inkjet printing method according to any one of claims 1 to 13, wherein the static surface tension of the varnish is at least 30 mN/m, determined according to the method identified in the description.

15. A varnished substrate produced by the method of any one of claims 1 to 14 that is suitable for use as packaging or indoor decoration.

## Patentansprüche

1. Ein Tintenstrahldruckverfahren, das die folgenden Schritte umfasst:
a) Aufsprühen eines Lacks auf ein Substrat, und
b) UV-Härtung des Lacks mit UV-LED-Quellen mit einer Spektralemission im Bereich von 360-420 nm nach einer Härtungsverzögerung von mindestens 2 Sekunden,
wobei die gemäß dem in der Beschreibung identifizierten Verfahren bestimmte statische Oberflächenspannung des Lacks bei 28 mN/m oder mehr liegt,
wobei der Lack mehr als 12 Gew.-% Acylphosphinoxid-Fotoinitiator, bezogen auf das Gesamtgewicht des Lacks, enthält, und
wobei die Härtungsverzögerung der Zeitraum zwischen dem Auftreffen eines Lacktröpfchens auf das Substrat und dem Anfang der UV-Härtung ist.

2. Das Tintenstrahldruckverfahren nach Anspruch 1, wobei der Lack ein Gemisch aus einem polyfunktionellen Acrylat und einem Methacrylat enthält.

3. Das Tintenstrahldruckverfahren nach Anspruch 2, wobei das polyfunktionelle Acrylat ein difunktionelles Acrylat ist.

4. Das Tintenstrahldruckverfahren nach einem der Ansprüche 1 bis 3, wobei der Lack eine polymerisierbare Zusammensetzung enthält, die Folgendes enthält:
a) 10 Gew.-% bis 30 Gew.-% eines monofunktionellen Methacrylats,
b) 40 Gew.-% bis 70 Gew.-% eines polyfunktionellen Acrylats, und
c) 0 Gew.-% bis 15 Gew.-% eines monofunktionellen Acrylats, wobei die Gewichtsprozentsätze bezogen auf das Gesamtgewicht des Lacks ausgedrückt sind.

5. Das Tintenstrahldruckverfahren nach einem der Ansprüche 1 bis 4, wobei das monofunktionelle Methacrylat einen gemäß dem in der Beschreibung identifizierten Verfahren bestimmten Tg-Wert von mehr als 25°C hat.

6. Das Tintenstrahldruckverfahren nach Anspruch 5, wobei das monofunktionelle Methacrylat Isobornylmethacrylat umfasst.

7. Das Tintenstrahldruckverfahren nach einem der Ansprüche 1 bis 6, wobei die polymerisierbare Zusammensetzung kein monofunktionelles Acrylat enthält.

8. Das Tintenstrahldruckverfahren nach einem der Ansprüche 1 bis 7, wobei der Lack eine Viskosität bei einer Temperatur von 25°C und einer Schergeschwindigkeit von 1.000 s⁻¹ von weniger als 13,0 mPa.s aufweist.

9. Das Tintenstrahldruckverfahren nach einem der Ansprüche 1 bis 8, wobei der Acylphosphinoxid-Fotoinitiator ein Acylphosphinoxidinitiator ist, wobei die Acylgruppe aus der Gruppe bestehend aus einer durch eine Harnstoffgruppe, eine Oxalylamidgruppe oder eine polymerisierbare Gruppe substituierten Benzoylgruppe, einer in 3-Stellung durch eine Harnstoffgruppe, eine Oxalylamidgruppe oder eine polymerisierbare Gruppe subsituierten 2,6-Dimethylbenzoylgruppe, einer in 3-Stellung durch eine Harnstoffgruppe, eine Oxalylamidgruppe oder eine polymerisierbare Gruppe subsituierten 2,6-Dimethoxybenzoylgruppe, einer in 3-Stellung durch eine Harnstoffgruppe, eine Oxalylamidgruppe oder eine polymerisierbare Gruppe subsituierten 2,4,6-Trimethylbenzoylgruppe und einer in 3-Stellung durch eine Harnstoffgruppe, eine Oxalylamidgruppe oder eine polymerisierbare Gruppe subsituierten 2,4,6-Trimethoxybenzoylgruppe gewählt wird.

10. Das Tintenstrahldruckverfahren nach einem der Ansprüche 1 bis 9, wobei das Substrat ein gedrucktes Bild umfasst.

11. Das Tintenstrahldruckverfahren nach Anspruch 10, wobei das gedruckte Bild ein durch Tintenstrahl gedrucktes, durch Tröpfchen einer Farbtinte gebildetes Farbbild ist.

12. Das Tintenstrahldruckverfahren nach Anspruch 11, wobei die Tröpfchengröße der die Lackschicht bildenden Tröpfchen und die Tröpfchengröße der das Farbbild bildenden Tröpfchen wesentlich gleich sind.

13. Das Tintenstrahldruckverfahren nach Anspruch 11 oder 12, wobei die Schichtdicke der Lackschicht größer ist als die Schichtdicke des Farbbildes.

14. Das Tintenstrahldruckverfahren nach einem der Ansprüche 1 bis 13, wobei die gemäß dem in der Beschreibung identifizierten Verfahren bestimmte statische Oberflächenspannung bei mindestens 30 mN/m liegt.

15. Ein nach dem Verfahren nach einem der Ansprüche 1 bis 14 hergestelltes lackiertes Substrat, das zur Verwendung als Verpackung oder Innendekoration geeignet ist.

## Revendications

1. Procédé d'impression à jet d'encre comprenant les étapes consistant à:
a) projeter un vernis sur un substrat, et
b) durcir par rayonnement ultraviolet le vernis à l'aide de sources LED UV ayant une émission spectrale comprise dans l'intervalle de 360 à 420 nm après un retard de durcissement d'au moins 2 secondes,
**caractérisé en ce que** la tension superficielle statique du vernis, telle que déterminée selon le procédé identifié dans la description, s'élève à au moins 28 mN/m,
**caractérisé en ce que** le vernis contient plus de 12% en poids d'un photo-initiateur d'oxyde d'acylphosphine par rapport au poids total du vernis, et
**caractérisé en ce que** le retard de durcissement est la période qui s'écoule entre l'atterrissage d'une gouttelette de vernis sur le substrat et le démarrage du durcissement par rayonnement ultraviolet.

2. Procédé d'impression à jet d'encre selon la revendication 1, **caractérisé en ce que** le vernis contient un mélange d'un acrylate polyfonctionnel et d'un méthacrylate.

3. Procédé d'impression à jet d'encre selon la revendication 2, **caractérisé en ce que** l'acrylate polyfonctionnel est un acrylate difonctionnel.

4. Procédé d'impression à jet d'encre selon l'une quelconque des revendications 1 à 3, **caractérisé en ce que** le vernis contient une composition polymérisable contenant:
a) 10% en poids à 30% en poids d'un méthacrylate monofonctionnel,
b) 40% en poids à 70% en poids d'un acrylate polyfonctionnel, et
c) 0% en poids à 15% en poids d'un acrylate monofonctionnel, **caractérisé en ce que** les pourcentages en poids sont exprimés par rapport au poids total du vernis.

5. Procédé d'impression à jet d'encre selon l'une quelconque des revendications 1 à 4, **caractérisé en ce que** le méthacrylate monofonctionnel présente une valeur Tg, telle que déterminée selon le procédé identifié dans la description, de plus de 25°C.

6. Procédé d'impression à jet d'encre selon la revendication 5, **caractérisé en ce que** le méthacrylate monofonctionnel comprend le méthacrylate d'isobornyle.

7. Procédé d'impression à jet d'encre selon l'une quelconque des revendications 1 à 6, **caractérisé en ce que** la composition polymérisable ne contient pas d'acrylate monofonctionnel.

8. Procédé d'impression à jet d'encre selon l'une quelconque des revendications 1 à 7, **caractérisé en ce que** le vernis présente une viscosité à une température de 25°C et à une vitesse de cisaillement de 1.000 s⁻¹ de moins de 13,0 mPa.s.

9. Procédé d'impression à jet d'encre selon l'une quelconque des revendications 1 à 8, **caractérisé en ce que** le photo-initiateur d'oxyde d'acylphosphine est un initiateur d'oxyde d'acylphosphine, où le groupe acyle est choisi parmi le groupe composé d'un groupe benzoyle substitué par un groupe urée, un groupe amide d'oxalyle ou un groupe polymérisable, d'un groupe 2,6-diméthylbenzoyle substitué en position 3 par un groupe urée, un groupe amide d'oxalyle ou un groupe polymérisable, d'un groupe 2,6-diméthoxybenzoyle substitué en position 3 par un groupe urée, un groupe amide d'oxalyle ou un groupe polymérisable, d'un groupe 2,4,6-triméthylbenzoyle substitué en position 3 par un groupe urée, un groupe amide d'oxalyle ou un groupe polymérisable et d'un groupe 2,4,6-triméthoxybenzoyle substitué en position 3 par un groupe urée, un groupe amide d'oxalyle ou un groupe polymérisable.

10. Procédé d'impression à jet d'encre selon l'une quelconque des revendications 1 à 9, **caractérisé en ce que** le substrat comprend une image imprimée.

11. Procédé d'impression à jet d'encre selon la revendication 10, **caractérisé en ce que** l'image imprimée est une image couleur imprimée par jet d'encre et formée par des gouttelettes d'une encre couleur.

12. Procédé d'impression à jet d'encre selon la revendication 11, **caractérisé en ce que** la taille des gouttelettes formant la couche de vernis et la taille des gouttelettes formant l'image couleur sont substantiellement identiques.

13. Procédé d'impression à jet d'encre selon la revendication 11 ou 12, **caractérisé en ce que** l'épaisseur de couche de la couche de vernis est supérieure à l'épaisseur de couche de l'image couleur.

14. Procédé d'impression à jet d'encre selon l'une quelconque des revendications 1 à 13, **caractérisé en ce que** la tension superficielle statique, telle que déterminée selon le procédé identifié dans la description, s'élève à au moins 30 mN/m.

15. Substrat vernissé fabriqué selon le procédé selon l'une quelconque des revendications 1 à 14 qui est approprié pour être utilisé comme emballage ou pour la décoration intérieure.
